# EUROPÄISCHE PATENTSCHRIFT

(11) **EP 2 122 445 B1**
(45) Veröffentlichungstag und Bekanntmachung des Hinweises auf die Patenterteilung: **20.02.2013**
(21) Anmeldenummer: 08748840.9
(22) Anmeldetag: 17.03.2008
(51) Int. Cl.: G06F 3/033, G05G 9/047

(54) **BEDIENELEMENT FÜR EIN KRAFTFAHRZEUG**
CONTROL ELEMENT FOR A MOTOR VEHICLE
ELEMENT DE COMMANDE POUR UN VEHICULE

(30) Priorität: 17.03.2007 DE 102007012852
(43) Veröffentlichungstag der Anmeldung: 25.11.2009
(73) Patentinhaber: Preh GmbH, 97616 Bad Neustadt a. d. Saale (DE)
(72) Erfinder: KRAMLICH, Andreas, 97424 Schweinfurt (DE)
(74) Vertreter: Bauer Vorberg Kayser Patentanwälte
(86) Internationale Anmeldenummer: PCT/EP2008/002113
(87) Internationale Veröffentlichungsnummer: WO 2008/113542

(56) Entgegenhaltungen:
- EP-A- 1 223 541
- WO-A-01/82049
- WO-A-2007/013725
- JP-A- 8 185 257
- US-A1- 2002 075 233
- US-A1- 2005 110 755
- US-A1- 2006 007 144
- US-A1- 2006 103 355
- US-A1- 2006 267 933
- US-A1- 2006 290 670

## Beschreibung

Die Erfindung betrifft ein verbessertes Eingabegerät für ein Kraftfahrzeug mit einer Bedienfläche und einem über die Bedienfläche bewegbaren Bedienelement, mit Mitteln zur Erfassung der Position und/oder Bewegung des Bedienelements auf der Bedienfläche und einer Auswerteinheit zur Erzeugung eines der erfassten Größe entsprechenden Steuersignals.

Es ist bekannt, ein sogenanntes Touchpad als Eingabegerät zu verwenden. Bei einem Touchpad erfolgt die Eingabe mittels einer berührempfindlichen Bedienfläche, wobei die von einem Finger verursachte lokale Kapazitätsänderung oder Widerstandsänderung erfasst wird, um so Positions- und/oder Bewegungsdaten zu erhalten, diese dann mit einer Auswerteinheit auszuwerten und als Steuersignale beispielsweise an ein zugehöriges Anzeigegerät auszugeben. Zwar finden derartige Touchpads im Auto Verwendung, aber nicht nur aufgrund der fehlenden haptischen Rückkopplung wird die Bedienung als ungeeignet empfunden. Die Bedienung ist störanfällig, da der Fahrer meist nicht die Gelegenheit hat, sich auf die Eingabe zu konzentrieren und damit der Anpressdruck mit dem Finger nicht ausreichend oder nicht gleichmäßig ist. Die Notwendigkeit, sich auf die Eingabe konzentrieren zu müssen, wird von den meisten Fahrern als störend empfunden und kann ein Sicherheitsrisiko darstellen.

Bei der Computernutzung wird gerne anstelle des in tragbaren Computern einigebauten Touchpads die sogenannte Maus als Eingabegerät bevorzugt. Eine Nutzung einer Maus als Eingabegerät im Fahrzeug ist bisher aufgrund der hohen Erschütterungen und Querbeschleunigungen nicht realisierbar gewesen. Es ist dem Verdienst der vorliegenden Erfinder zuzurechnen, erkannt zu haben, dass hier ein lange bestehendes Bedürfnis besteht, das derzeitig immer noch nicht befriedigt wird und es ist Ihrem Verdienst zuzurechnen, darin eine Aufgabe gesehen zu haben. Die Erfinder haben sich daher die Aufgabe gestellt, ein leicht zu bedienendes Eingabegerät bereitzustellen, dass auch unter vergleichsweise hohen Erschütterungen und Querbeschleunigung, wie sie beispielsweise im Fahrzeug auftreten, verwendet werden kann.

Das Dokument US 2006 0290670 offenbart ein herkömmliche Eingabegerät.

Diese Aufgabe wird erfindungsgemäß gelöst, durch ein Bedienelement gemäß Anspruchs 1. Vorteilhafte Ausgestaltungen sind jeweils Gegenstand der abhängigen Ansprüche.

Die Erfindung betrifft ein Eingabegerät mit einer Bedienfläche und einem über die Bedienfläche bewegbaren Bedienelement. Hinsichtlich des Bedienelements ist die Erfindung nicht eingeschränkt und es kommen vielerlei, vorteilhaft ergonomisch geformte Körper in Frage. Beispielsweise handelt es sich um einen rotationssymmetrischen, einem Drehknopf ähnlichen Körper. Bevorzugt ist der Körper vergleichsweise klein gehalten, um für ein gutes Auflösungsvermögen der Positionserkennung eine möglichst geringe Auflagefläche auf der Bedienfläche zu erreichen. Zudem wird so die Anpackfläche verringert, um ein Entfernen des Bedienelements von der Bedienfläche zu erschweren.

Es sind Mittel zur Erfassung der Position und/oder Bewegung des Bedienelements auf der Bedienfläche vorgesehen. Eine Auswerteinheit dient der Erzeugung eines der erfassten Größe entsprechenden Steuersignals. Die Mittel zur Erfassung der Position und/oder Bewegung sowie die Auswerteinheit sind in einer Ausgestaltung in das Bedienelement integriert und der Aufbau des Bedienelements entspricht diesbezüglich beispielsweise einem Aufbau einer mechanischen oder optischen Maus. Das Steuersignal wird beispielsweise zu einer der Bewegung des Bedienelements entsprechenden Steuerung, das heißt Bewegung, eines Cursors auf einem Anzeigegerät verwendet. Aber andere Anwendungen des Steuersignals, beispielsweise eines Musikabspielgeräts sind denkbar. Das erfindungsgemäße Eingabegerät zeichnet sich dadurch aus, dass das Bedienelement mittels einer magnetischen Kraft an der Bedienfläche haftend anliegt. Dadurch wird erreicht, dass trotz einwirkender Erschütterungen und Querbeschleunigungen, das heißt Kräften parallel zur Bedienfläche, das Bedienelement an der Bedienfläche haften bleibt. Dadurch kann beispielsweise das Eingabegerät mit schräg stehender Bedienfläche oder bei Bewegung der Bedienfläche, beispielsweise in einem Kraftfahrzeug, verwendet werden Es obliegt dem Fachmann, die für den jeweiligen Anwendungsfall optimale Haftwirkung durch Vorgabe der magnetischen Kraft in Kombination mit der Haftreibung zwischen Bedienelement und Bedienfläche zu wählen. Im Allgemeinen wird eine derartige Kraft gewählt, die neben der zuvor genannten Wirkung immer noch eine vergleichsweise leichtgängige Bedienung ermöglicht. Ein optimaler Zustand kann durch wenige Versuche ermittelt werden.

Bevorzugt wird die Position und/oder Bewegung des Bedienelements kapazitiv oder resistiv (FSR™-Folie) erfasst. Die Technologien hierzu sind unter anderem vom Touchpad bekannt, und können ohne weiteres auf die erfindungsgemäße Vorrichtung übertragen werden.

Der durch die magnetische Kraft erzeugte Anpressdruck wird nicht nur für die Haftwirkung sonder auch zur Positions- und/oder Bewegungserkennung verwendet. Die Eingabefläche ist auf der dem Bediener zugewandten Seite mit einer so genannten berührungsempfindlichen Schicht oder Folie versehen, die unter Einwirkung des Anpressdrucks lokal ihre Kapazität oder ihren Widerstand ändert und so eine Positionserkennung ermöglicht.

In einer bevorzugten Ausgestaltung wird die magnetische Kraft durch einen bedienelementseitigen Magneten, bevorzugter Permantenmagneten und eine ferromagnetische Bedienfläche oder einen bedienflächenseitigen Gegenmagneten erzeugt. Dadurch kann die Erfindung einfach und preiswert realisiert werden.

Die Position und/oder Bewegung mittels eines magnetisch wird mit dem Bedienelement gekoppelten Mitnehmers erfasst. Das heißt der Mitnehmer folgt aufgrund der magnetischen Koppelung der Bewegung des Eingabeelements. Daher können vorteilhaft die vergleichsweise empfindlichen Mittel zur Positions- oder Bewegungserfassung geschützt auf der dem Bediener abgewandten Seite der Bedienfläche und durch diese vor Staub, Beschädigung und Reinigungsflüssigkeiten geschützt angeordnet werden. Beispielsweise befindet sich auf der vom Bediener abliegenden Oberfläche der Bedienfläche um die berührungsempfindliche Schicht, auf die im zuvor beschriebenen Fall der Mitnehmer einwirkt.

In einer weiteren vorteilhaften Ausgestaltung ist das Bedienelement mit wenigstens einem betätigbaren Schalter versehen, dessen Schaltzustand per Funk oder Infrarot an die Auswerteinheit übertragen wird. Beispielsweise wird dadurch eine Auswahlbestätigung vorgenommen. Bevorzugt wird das Bedienelement induktiv mit Energie versorgt, indem beispielsweise ein elektromagnetisches Wechselfeld im Bereich des Eingabefeldes erzeugt wird. Beispielsweise wird ein passiver Transponder verwendet. In einer anderen Ausgestaltung wird passive RFID-Technologie verwendet. Dabei kann die jeweils übertragene Transponderkennung genutzt werden, ein zugehöriges Bedienelement eindeutig zu identifizieren.

Das erfindungsgemäße Eingabegerät wird bevorzugt in einem Kraftfahrzeug verwendet. So kann trotz der beim Fahren auftretenden Erschütterungen und Querbeschleunigungen der Fahrer auf ein für ihn leicht zu bedienendes und ihm wenig Aufmerksamkeit abverlangendes, "Maus"-ähnliches Eingabegerät zurückgreifen. Der Umgang mit einem solchen Gerät ist dem Fahrer in der Regel sehr geläufig, so dass es keiner sicherheitsgefährdenden Eingewöhnungsphase bedarf.

Die Erfindung betrifft ferner ein Haushaltsgerät mit einem Eingabegerät in einer der zuvor beschriebenen, vorteilhaften Ausführungsformen. Das erfindungsgemäße Eingabegerät kann beispielsweise vorteilhaft auch dort eingebaut werden, wo eine schräg stehende oder auch senkrechter Einbau der Bedienfläche erforderlich ist, wobei dem Bediener gleichzeitig unter Umgehung der eingangs erwähnten Nachteile des reinen Touchpads eine für ihn komfortable und gewohnte, "Maus"-ähnliche Eingabemöglichkeit durch das erfindungsgemäße Eingabegerät ermöglicht wird.
- Figur 1: eine schematische Schnittansicht einer nicht erfindungsgemässen Ausführungsform zeigt,
- Figur 2: eine schematische Schnittansicht einer nicht erfindungsgemässen Ausführungsform zeigt, und
- Figur 3: eine schematische Schnittansicht einer ersten Ausführungsform zeigt.

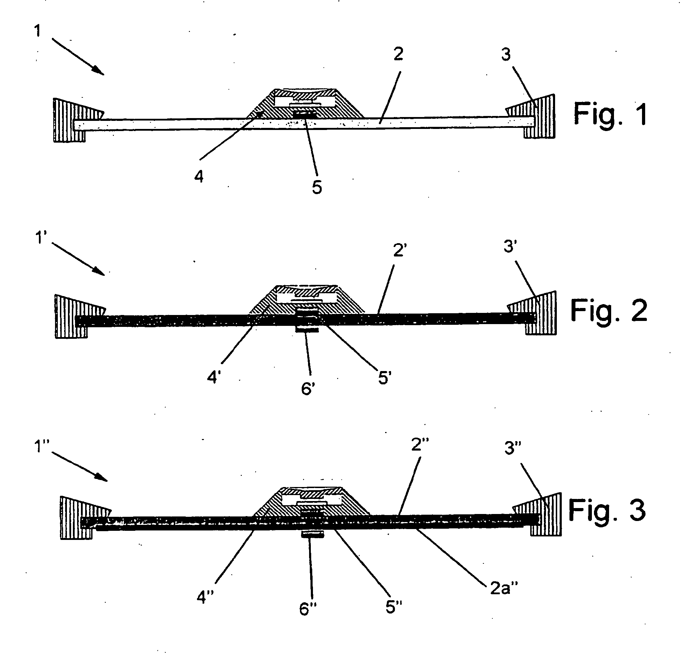

Fig. 1 zeigt eine nicht erfindungsgemässen Ausführungsform des erfindungsgemäßen Eingabegeräts 1. Eine ferromagnetische Bedienfläche 2 ist in einem Rahmen 3 gelagert. Auf der Bedienfläche 2 befindet sich ein Bedienelement 4. Dessen händische Bedienung, das heißt Verschiebung auf der Bedienfläche 2 wird beispielsweise mittels mehrerer im Rahmen 3 integrierter Lichtschranken erfasst und mittels einer nicht dargestellten Auswerteinheit in ein der Bewegung entsprechendes Steuersignal umgewandelt. Durch einen in das Bedienelement 4 integrierten Permanentmagneten wird im Zusammenwirken mit der ferromagnetischen Bedienfläche 2 eine magnetische Haftkraft erzeugt, die dafür sorgt, dass auch bei Querbeschleunigung oder Schräglage der Bedienfläche 2, das Bedienelement 4 nicht von der Bedienfläche 2 fällt.

Fig. 2 zeigt eine nicht erfindungsgemässen Ausführungsform des erfindungsgemäßen Eingabegeräts 1'. Eine nicht magnetische Bedienfläche 2' ist in einem Rahmen 3' gelagert. Auf der Bedienfläche 2' befindet sich ein Bedienelement 4'. Durch einen in das Bedienelement 4' integrierten Permanentmagneten wird im Zusammenwirken mit einem magnetischen Mitnehmer 6', bei dem es sich ebenfalls um einen Permanentmagneten handelt und der sich auf der dem Bediener abgewandten Seite der Bedienfläche 2' befindet, eine magnetische Haftkraft erzeugt, die dafür sorgt, dass auch bei Querbeschleunigung oder Schräglage der Bedienfläche 2', das Bedienelement 4' nicht von der Bedienfläche 2' fällt. Bei dieser Ausgestaltung erfolgt die Erfassung der händischen Bedienung, das heißt Verschiebung des Bedienelements 4' auf der Bedienfläche 2' mittels des Mitnehmers 6'. Beispielsweise wird dessen Bewegung mittels Lichtschranken erfasst und mittels einer nicht dargestellten Auswerteinheit in ein der Bewegung entsprechendes Steuersignal umgewandelt. Die Mittel zur Erfassung der Position beziehungsweise Bewegung des Bedienelements 4' beziehungsweise seines Mitnehmers 6' befinden sich auf einer durch die Bedienfläche geschützten Seite des Eingabegeräts 1'.

Fig. 3 zeigt eine erste Ausführungsform des erfindungsgemäßen Eingabegeräts 1". Eine nicht magnetische Bedienfläche 2" ist in einem Rahmen 3" gelagert. Auf der Bedienfläche 2" befindet sich ein Bedienelement 4". Durch einen in das Bedienelement 4" integrierten Permanentmagneten wird im Zusammenwirken mit einem magnetischen Mitnehmer 6", bei dem es sich ebenfalls um einen Permanentmagneten handelt und der sich auf der dem Bediener abgewandten Seite der Bedienfläche 2" befindet, eine magnetische Haftkraft erzeugt, die dafür sorgt, dass auch bei Querbeschleunigung oder Schräglage der Bedienfläche 2", das Bedienelement 4" nicht von der Bedienfläche 2" fällt. Bei dieser Ausgestaltung erfolgt die Erfassung der händischen Bedienung, das heißt Verschiebung des Bedienelements 4" auf der Bedienfläche 2" mittels des Mitnehmers 6" und einer auf der dem Bediener abgewandten Seite der Bedienfläche 2" angebrachten berührungsempfindlichen, beispielsweise resistive oder kapazitive Folie 2a". Die Folie 2a" zur Erfassung der Position beziehungsweise Bewegung des Bedienelements 4" beziehungsweise seines Mitnehmers 6" befinden sich auf einer durch die Bedienfläche geschützten Seite des Eingabegeräts 1".

## Patentansprüche

1. Eingabegerät (1") mit einer Bedienfläche (2") und einem über die Bedienfläche bewegbaren Bedienelement (4"), mit Mitteln zur Erfassung der Position und/oder Bewegung des Bedienelements (4") auf der Bedienfläche und einer Auswerteinheit zur Erzeugung eines der erfassten Größe entsprechenden Steuersignals, wobei das Bedienelement (4") mittels einer magnetischen Kraft (5", 6") an der Bedienfläche (2") haftend anliegt und das Eingabegerät (1") ferner einen mit dem Bedienelement magnetisch gekoppelten Mitnehmer (6") aufweist, **dadurch gekennzeichnet, dass** die Mittel zur Erfassung der Position und/oder Bewegung des Bedienelements (4") eine berührungsempfindliche Schicht oder eine berührungsempfindliche Folie (2a") auf der dem Bediener abgewandten Seite der Bedienfläche (2") aufweisen, die unter Einwirkung des Anpressdrucks lokal ihre Kapazität oder ihren Widerstand ändert und dass der durch die magnetische Kraft erzeugte Anpressdruck des Mitnehmers (6") auf die berührungsempfindliche Schicht oder die berührungsempfindliche Folie (2a") zur Positions- und/oder Bewegungserkennung des Bedienelements (4") verwendet wird.

2. Eingabegerät (1, 1', 1") nach Anspruch 1, **dadurch gekennzeichnet, dass** die Position und/oder Bewegung des Bedienelements (4, 4', 4") kapazitiv oder resistiv erfasst wird.

3. Eingabegerät (1, 1', 1") nach einem der vorhergehenden Ansprüche, **dadurch gekennzeichnet, dass** das Bedienelement mit wenigstens einem betätigbaren Schalter versehen ist, dessen Schaltzustand per Funk oder Infrarot an die Auswerteinheit übertragen wird.

4. Eingabegerät (1, 1', 1 ") nach einem der vorhergehenden Ansprüche, **dadurch gekennzeichnet, dass** das Bedienelement induktiv mit Energie versorgt wird.

5. Kraftfahrzeug **gekennzeichnet durch** ein Eingabegerät (1, 1', 1") nach einem der vorhergehenden Ansprüche 1 bis 4.

6. Haushaltsgerät **gekennzeichnet durch** ein Eingabegerät (1, 1', 1") nach einem der vorhergehenden Ansprüche 1 bis 4.

## Claims

1. An input device (1"), comprising a control surface (2") and a control element (4") that can be moved over the control surface, with means for detecting the position and/or movement of the control element (4") on the control surface and an evaluation unit for generating a control signal corresponding to the detected quantity, wherein the control element (4") adheringly rests against the control surface (2") by means of a magnetic force (5", 6"), and the input device (1") moreover comprises a tappet (6") magnetically coupled with the control element, **characterised in that** the means for detecting the position and/or movement of the control element (4") comprise a touch-sensitive layer or a touch-sensitive foll (2a") on the side of the control surface (2") facing away from the operator, which changes their capacitance or resistance locally under the influence of the contact pressure, and that the contact pressure of the tappet (6") on the touch-sensitive layer or touch-sensitive foil (2a") generated by the magnetic force is used for the position and/or movement recognition of the control element (4").

2. An Input device (1, 1', 1") according to claim 1, **characterised in that** the position and/or movement of the control element (4, 4', 4") is detected capacitively or resistively.

3. An Input device (1, 1', 1") according to any one of the preceding claims, **characterised in that** the control element is provided with at least one actuatable switch, the switching status of which is transmitted to the evaluation unit via radio or infrared.

4. An input device (1, 1', 1") according to any one of the preceding claims, **characterised in that** the control element is inductively supplied with power.

5. A motor vehicle, **characterised by** an input device (1, 1', 1") according to any one of the preceding claims 1 to 4.

6. A household appliance, **characterised by** an input device (1, 1', 1") according to any one of the preceding claims 1 to 4.

## Revendications

1. Appareil d'introduction (1") comprenant une surface de commande (2") et un élément de commande (4") apte à être déplacé sur ladite surface de commande, des moyens de détection de la position et/ou du mouvement dudit élément de commande (4") sur ladite surface de commande ainsi qu'une unité d'évaluation pour générer un signal de commande correspondant à la grandeur détectée, ledit élément de commande (4") s'appliquant au moyen d'une force magnétique (5", 6") sur ladite surface de commande (2") et ledit appareil d'introduction (1") comprenant en outre un entraîneur (6") couplé de façon magnétique audit élément de commande, **caractérisé par le fait que** lesdits moyens de détection de la position et/ou du mouvement de l'élément de commande (4") présentent, sur la face de ladite surface de commande (2") qui est opposée à l'utilisateur, une couche sensible au toucher ou une feuille sensible au toucher (2a") qui, sous l'action de la pression d'appui, change localement sa capacité ou sa résistance, et que la pression d'appui dudit entraîneur (6") sur la couche sensible au toucher ou sur la feuille sensible au toucher (2a"), qui est générée par la force magnétique, est utilisée pour la détection de position et/ou de mouvement dudit élément de commande (4").

2. Appareil d'introduction (1, 1', 1") selon la revendication 1, **caractérisé par le fait que** la position et/ou le mouvement de l'élément de commande (4, 4', 4") est détecté(e) de façon capacitive ou résistive.

3. Appareil d'introduction (1, 1', 1") selon l'une quelconque des revendications précédentes, **caractérisé par le fait que** ledit élément de commande est pourvu d'au moins un interrupteur apte à être actionné dont l'état de commutation est transmis par radio ou infrarouge à ladite unité d'évaluatlon.

4. Appareil d'introduction (1, 1', 1") selon l'une quelconque des revendications précédentes, **caractérisé par le fait que** ledit élément de commande est alimenté de façon inductive en énergie.

5. Véhicule automobile, **caractérisé par** un appareil d'introduction (1, 1', 1") selon l'une quelconque des revendications précédentes 1 à 4.

6. Appareil ménager, **caractérisé par** un appareil d'introduction (1, 1', 1") selon l'une quelconque des revendications précédentes 1 à 4.
